# EUROPEAN PATENT SPECIFICATION

(11) **EP 3 171 475 B1**
(45) Date of publication and mention of the grant of the patent: **30.03.2022**
(21) Application number: 16197738.4
(22) Date of filing: 08.11.2016
(51) Int. Cl.: H02H 9/06, H02H 9/04, H02H 1/04, H02H 3/20

(54) **POWER SUPPLY PROTECTOR AND AIR-CONDITONING SYSTEM INCLUDING THE SAME, AND METHOD FOR MANUFACTURING POWER SUPPLY PROTECTOR**
STROMVERSORGUNGSSCHUTZVORRICHTUNG UND DAMIT AUSGESTATTETE KLIMAANLAGE SOWIE VERFAHREN ZUR HERSTELLUNG DER STROMVERSORGUNGSSCHUTZVORRICHTUNG
PROTECTION D'ALIMENTATION ÉLECTRIQUE ET SYSTÈME DE CLIMATISATION COMPRENANT CELUI-CI, ET PROCÉDÉ DE FABRICATION DE PROTECTION D'ALIMENTATION ÉLECTRIQUE

(30) Priority: 20.11.2015 JP 2015227463
(43) Date of publication of application: 24.05.2017
(73) Proprietor: MITSUBISHI HEAVY INDUSTRIES THERMAL SYSTEMS, LTD., Tokyo 108-8215 (JP)
(72) Inventor: ADACHI, Naoya, Minato-ku, Tokyo 108-8215 (JP)
(74) Representative: Cabinet Beau de Loménie

(56) References cited:
- CN-Y- 2 850 087
- JP-A- H1 127 856
- JP-A- H09 172 733
- JP-A- 2011 160 557
- JP-A- 2011 199 979

## Description

### {Technical Field}

The present invention relates to a power supply protector and an air-conditioning system including the same, and a method for manufacturing a power supply protector.

### {Background Art}

There has been known a lightning surge countermeasure circuit having a varistor connected in parallel with a power supply and connected to the ground, but such a lightning surge countermeasure circuit has a problem that all surge energy applied cannot be removed, and a capacitor and an AC line noise filter in a noise filter circuit amplify a surge voltage to damage electronic components and the like connected to its later stages, and a countermeasure to this problem has been proposed.

PTL 1 to PTL 3 each propose a circuit in which an arrester is connected in parallel with the AC line noise filter circuit and a reactor to protect from the surge voltage. The applied energy needs to be diverted to the ground, as in PTL 1 to PTL 3, a circuit provided only with the arrester for protecting from the surge voltage cannot remove all of the applied surge energy. Therefore, a further method for removing the applied surge energy has been studied.

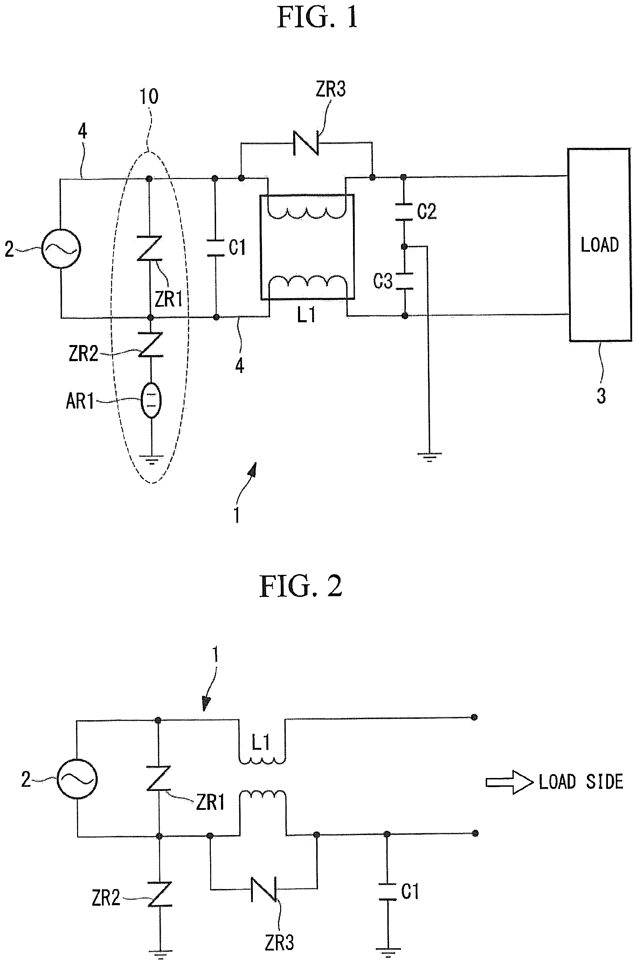

PTL 4 proposes a power supply protector including a traditional lightning surge countermeasure circuit and a varistor ZR3 connected with both ends of a coil L1 as a noise reducing filter as shown in Fig. 2.

### {Citation List}

### {Patent Literature}

{PTL 1} Japanese Unexamined Patent Application, Publication No. 2010-239758
{PTL 2} Japanese Unexamined Patent Application, Publication No. 2010-98872
{PTL 3} Japanese Unexamined Patent Application, Publication No. 2011-160557
{PTL 4} Japanese Unexamined Patent Application, Publication No. H11-27856

### {Summary of Invention}

### {Technical Problem}

Considering the above, there is a need for a power supply device used for an indoor unit of an air-conditioning device is required to undergo a withstand voltage test for confirming insulation.

The air-conditioning device with the power supply of about AC 170 to 264 {V} is assumed to undergo a withstand voltage test which supplies a voltage of 1500 {V} for one minute and 1800 {V} for one second to determine whether a substrate is normal or abnormal in such a test.

However, in the method disclosed in PTL 4, a problem arises in that varistors ZR1 and ZR2 cannot stand such a withstand voltage test and a power circuit is damaged. In addition, PTL 4 describes an implementation having a varistor voltage of the varistor ZR2 about 1200 {V} and a varistor voltage of the varistor ZR3 about 400 to 600 {V}. This implementation however leads to an increase of the cost due to a difference in specifications of the varistors.

The present invention has been made in consideration of such technical issues, and aims at providing a power supply protector capable of restraining a cost and capable of standing a withstand voltage test for an air-conditioning device, an air-conditioning system including the same, and a method for manufacturing the power supply protector.

### {Solution to Problem}

A first aspect of the present invention is a power supply protector connected between a power supply and a load supplied with electricity from the power supply, the power supply protector including a first varistor connected in parallel with the power supply, a second varistor connected between one end of the first varistor and a ground line, an arrester connected between the second varistor and the ground line, a filter connected between the power supply and the load to reduce noise of a power supply line, and a third varistor having terminals respectively connected to input and output sides of the filter on at least one side of the power supply line connected with the load, in which capacitances of the first varistor, the second varistor, and the third varistor are equal.

According to the first aspect of the invention, even if the voltage supplied from the power supply is applied as a high voltage like a lightning surge, the first varistor, the second varistor, and the arrester may remove the surge energy. In addition, the varistor(third varistor) is provided between the input and output terminals of the filter for reducing the noise, which can restrain the cost as compared with a case where the arrester is provided as in the related art.

The arrester is connected between the second varistor and the ground line, which can reduce a size of the second varistor, as compared with the case where the arrester is not provided, and therefore, the capacitances of the first varistor, the second varistor, and the third varistor can be equal, allowing the same kind of varistor to be used to improve the production efficiency.

A second aspect of the invention is an air-conditioning system including an air-conditioning device including an indoor unit and an outdoor unit, and the above power supply protector which is provided with the indoor unit.

A third aspect of the invention is a method for manufacturing a power supply protector including a first varistor connected in parallel with a power supply, a second varistor connected between one end of the first varistor and a ground line, and a filter connected between the power supply and a load to reduce noise of a power supply line, the power supply protector being connected between the power supply and the load supplied with electricity from the power supply, the method including a step of equalizing capacitances of the first varistor, the second varistor, and a third varistor connected to input and output sides of the filter, a step of connecting an arrester between the second varistor and the ground line, and a step of connecting terminals of the third varistor respectively to the input and output sides of the filter on at least one side of the power supply line connected with the load.

The arrester is provided between the second varistor and the ground line, which allows the varistor voltage of the second varistor to be lowered as compared with a case where the arrester is not provided, and therefore, the capacitances of the first varistor, the second varistor, and the third varistor may be equal. Therefore, the same kind of varistor can be used, improving the production efficiency.

### {Advantageous Effects of Invention}

The present invention can give an effect capable of restraining a cost of a power supply protector and of standing a withstand voltage test for an air-conditioning device.

### {Brief Description of Drawings}

{Fig. 1} Fig. 1 is a circuit block diagram of a power supply protector according to an embodiment of the invention.
{Fig. 2} Fig. 2 is a configuration diagram of a device of a power supply protective circuit of related art.

### {Description of Embodiments}

Hereinafter, a description is given of a power supply protector according to an embodiment of the invention and an air-conditioning system including the same, and a method for manufacturing a power supply protector with reference to the drawings. In the embodiment, the description assumes that the power supply protector is provided in a substrate which is connected with a power supply in a control device of an indoor unit for the air-conditioning system, but the invention is not limited thereto.

Fig. 1 shows a circuit block diagram of a power supply protector 1 according to the embodiment.

The power supply protector 1 is connected between a power supply 2 and a load 3 which is supplied with electricity from the power supply 2. The power supply protector 1 includes a first circuit 10, a third varistor ZR3, a noise reduction filter L1, a capacitor C1 provided between the noise reduction filter L1 and the first circuit 10, capacitors C2 and C3 provided between the noise reduction filter L1 and a load side. A ground line is connected from between the capacitors C2 and C3.

The first circuit 10 includes a first varistor ZR1, a second varistor ZR2, and an arrester AR1.

The first varistor ZR1 is connected in parallel with the power supply 2 and has both ends connected with a power supply line 4.

The second varistor ZR2 is connected between one end of the first varistor ZR1 and a ground line.

The arrester AR1 is connected between the second varistor ZR2 and the ground line. The arrester AR1 of 3 {kV} or more is used so as not to operate during the withstand voltage test.

The third varistor ZR3 has terminals respectively connected to input and output sides of the noise reduction filter L1 on at least one side of the power supply line 4 connected with the load 3.

Providing the third varistor ZR3 on the input and output sides of the noise reduction filter L1 is advantageous in that an operation is speeded up, a surge current is advantageously shorted, and the cost can be restrained, as compared with a case where an arrester is provided on the relevant location.

The noise reduction filter L1 is connected between the power supply 2 and the load 3 to reduce the noise of the power supply line 4.

A varistor used for the first varistor ZR1 and the second varistor ZR2 is required to have a varistor voltage of 470 {V} or more if an air-conditioning device has a power supply of AC 170 to 264 {V}. In the embodiment, providing the arrester AR1 between the second varistor ZR2 and the ground line in the first circuit 10 allows capacitances of the first varistor ZR1 and the second varistor ZR2 connected in series with each other to be lowered as compared with a case where an arrester is not provided on the relevant location.

For this reason, a varistor having the same specification can be used for the third varistor ZR3, the first varistor ZR1, and the second varistor ZR2.

Considering a case where an arrester is provided to input and output terminals of the noise reduction filter L1, an arrester having an arrester voltage of, for example, 0.5 {kV} or less is used as the arrester provided to this location since the surge is readily reduced as the arrester voltage is smaller. On the other hand, the arrester provided to the first circuit 10 is required to have the arrester voltage of 3 {kV} or more in order not to operate in conducting the withstand voltage test. In other words, the arresters of the different specification are required to be used for the arrester provided in parallel with the noise reduction filter L1 and the arrester provided to the first circuit 10, which is inefficient in terms of production.

In the embodiment, because the noise reduction filter L1 is provided with the third varistor ZR3 in parallel therewith and the first circuit 10 is provided with the arrester having the arrester voltage of 3 {kV} or more, and the like, the first varistor ZR1, second varistor ZR2, and third varistor ZR3 to be used may have the equal capacitance, which is efficient in terms of production.

Note that it was found that in a case where the noise reduction filter L1 is provided with the arrester in parallel therewith, the cost increases three times as compared with the case of providing the varistor, and therefore, the varistor may be more advantageously provided in terms of the cost.

The withstand voltage test for a package air conditioner is a test in which the voltage of 1500 {V} for one minute and 1800 {V} for one second is supplied from the power supply 2 side to measure whether or not the power supply protector 1 (substrate) can hold.

A test for the lightning surge caused by a lightning strike (lightning test) is a test in which a voltage 2 {kV} is supplied between the power supply protector 1 and the ground and a line voltage of 1{kV} is supplied to measure whether or not the power supply protector 1 can hold.

The configuration of the power supply protector 1 in the embodiment can stand the withstand voltage test and lightning test for the package air conditioner and restrain the cost.

Hereinafter, a description is given of an action of the power supply protector 1.

A voltage of 1500 {V} for one minute and 1800 {V} for one second are applied from the power supply 2. The power supply protector 1 has the voltage restricted to a predetermined voltage or less by the first circuit 10 to protect circuits and components on the later stage.

The AC line noise filter circuit may possibly amplify the surge voltage to cause a voltage of around 5 to 10 {kV} to be applied to the third varistor ZR3. The third varistor ZR3, to which a surge exceeding the varistor voltage is not applied, is highly electric-resistive, but if the surge voltage exceeds the varistor voltage, the electrical resistance between the terminals with which the third varistor ZR3 is connected is rapidly lowered. When the surge is applied to the circuit, by flowing a surge current determined depending on the surge voltage and surge impedance of the third varistor ZR3, the surge voltage can be restrained to a limitation voltage for the varistor.

As described above, in accordance with the power supply protector 1 according to the embodiment, and air-conditioning system including the same, and the method for manufacturing the power supply protector 1, even if the voltage supplied from the power supply 2 is applied as a high voltage like the lightning surge, the first varistor ZR1, the second varistor ZR2, and the arrester AR1 remove the surge energy. In addition, the third varistor ZR3 is provided between the input and output terminals of the noise reduction filter L1 for reducing the noise, which can restrain the cost as compared with the case where the arrester is provided between the input and output terminals of the noise reduction filter L1 as in the related art.

The arrester AR1 is connected between the second varistor ZR2 and the ground line, which can reduce the capacitances of the first varistor ZR1 and the second varistor ZR2, as compared with the case where the arrester AR1 is not provided at the relevant location. Therefore, the capacitances of the first varistor ZR1, the second varistor ZR2, and the third varistor ZR3 can be equal, which allows the same kind of varistor to be used, improving the production efficiency.

Hereinbefore, the embodiment of the present invention is described in detail with reference to the drawings, where the specific configuration is not limited to this embodiment and design modification or the like in the scope of the invention is also included. For example, in the above embodiment, the third varistor ZR3 is provided to the power supply line 4 only on the lower side of the paper plane, but is not limited thereto, and the third varistor ZR3 may be provided to the power supply line 4 both on the upper and lower sides of the paper plane. Accordingly, even in the case where the third varistor ZR3 is provided only on one side, the surge on both sides can be removed due to an effect of a common mode coil, but the third varistor ZR3 provided on both sides can further remove the surge.

### {Reference Signs List}

- 1: power supply protector
- 2: power supply
- 3: load
- 4: power supply line
- ZR1: first varistor
- ZR2: second varistor
- ZR3: third varistor
- AR1: arrester
- L1: noise reduction filter

## Claims

1. A power supply protector (1) connected between a power supply (2) and a load (3), the power supply (2) being adapted to supply the load (3) with electricity, the power supply protector (1) comprising:
a first varistor (ZR1) connected in parallel with the power supply (2);
a second varistor (ZR2) connected between one end of the first varistor (ZR1) and a ground line;
an arrester (AR1) connected between the second varistor (ZR2) and the ground line;
a filter (L1) connected between the power supply (2) and the load (3) to reduce noise of a power supply line (4); and
a third varistor (ZR3) having terminals respectively connected to input and output sides of the filter (L1) on the power supply line (4) connected with the load (3), wherein
capacitances of the first varistor (ZR1), the second varistor (ZR2), and the third varistor (ZR3) are equal.

2. An air-conditioning system comprising:
an air-conditioning device including an indoor unit and an outdoor unit; and
the power supply protector (1) according to claim 1 which is provided with the indoor unit.

3. A method for manufacturing a power supply protector (1) including a first varistor (ZR1) connected in parallel with a power supply (2), a second varistor (ZR2) connected between one end of the first varistor (ZR1) and a ground line, and a filter (L1) connected between the power supply (2) and a load (3) to reduce noise of a power supply line (4), the power supply protector (1) being connected between the power supply (2) and the load (3) supplied with electricity from the power supply (2), the method comprising:
a step of equalizing capacitances of the first varistor (ZR1), the second varistor (ZR2), and a third varistor (ZR3) connected to input and output sides of the filter (L1);
a step of connecting an arrester (AR1) between the second varistor (ZR2) and the ground line; and
a step of connecting terminals of the third varistor (ZR3) respectively to the input and output sides of the filter (L1) on the power supply line (4) connected with the load (3).

## Patentansprüche

1. Stromversorgungsschutzvorrichtung (1), die zwischen einer Stromversorgung (2) und einer Last (3) verbunden ist, wobei die Stromversorgung (2) dazu geeignet ist, die Last (3) mit Elektrizität zu versorgen, wobei die Stromversorgungsschutzvorrichtung (1) umfasst:
einen ersten Varistor (ZR1), der mit der Stromversorgung (2) parallelgeschaltet ist;
einen zweiten Varistor (ZR2), der zwischen einem Ende des ersten Varistors (ZR1) und einer Masseleitung verbunden ist;
einen Ableiter (AR1), der zwischen dem zweiten Varistor (ZR2) und der Masseleitung verbunden ist;
ein Filter (L1), das zwischen der Stromversorgung (2) und der Last (3) verbunden ist, um Rauschen einer Stromversorgungsleitung (4) zu vermindern; und
einen dritten Varistor (ZR3), der Anschlüsse aufweist, die mit Eingangs- beziehungsweise Ausgangsseiten des Filters (L1) auf der mit der Last (3) verbundenen Stromversorgungsleitung (4) verbunden sind, wobei
Kapazitäten des ersten Varistors (ZR1), des zweiten Varistors (ZR2) und des dritten Varistors (ZR3) gleich sind.

2. Klimaanlage, die umfasst:
eine Klimavorrichtung, die eine Inneneinheit und eine Außeneinheit umfasst; und
die Stromversorgungsschutzvorrichtung (1) nach Anspruch 1, die mit der Inneneinheit bereitgestellt ist.

3. Verfahren zur Herstellung einer Stromversorgungsschutzvorrichtung (1), die einen ersten Varistor (ZR1), der mit einer Stromversorgung (2) parallelgeschaltet ist, einen zweiten Varistor (ZR2), der zwischen einem Ende des ersten Varistors (ZR1) und einer Masseleitung verbunden ist, und ein Filter (L1) umfasst, das zwischen der Stromversorgung (2) und einer Last (3) verbunden ist, um Rauschen einer Stromversorgungsleitung (4) zu vermindern, wobei die Stromversorgungsschutzvorrichtung (1) zwischen der Stromversorgung (2) und der Last (3) verbunden ist, die mit Elektrizität von der Stromversorgung (2) versorgt wird, wobei das Verfahren umfasst:
einen Schritt des Ausgleichens von Kapazitäten des ersten Varistors (ZR1), des zweiten Varistors (ZR2) und eines dritten Varistors (ZR3), der mit Eingangs- und Ausgangsseiten des Filters (L1) verbunden ist;
einen Schritt des Verbindens eines Ableiters (AR1) zwischen dem zweiten Varistor (ZR2) und der Masseleitung; und
einen Schritt des Verbindens von Anschlüssen des dritten Varistors (ZR3) mit den Eingangs- beziehungsweise Ausgangsseiten des Filters (L1) auf der mit der Last (3) verbundenen Stromversorgungsleitung (4).

## Revendications

1. Protection d'alimentation de puissance électrique (1) connectée entre une alimentation de puissance électrique (2) et une charge (3), l'alimentation de puissance électrique (2) étant adaptée pour alimenter la charge (3) en électricité, la protection d'alimentation de puissance électrique (1) comprenant :
une première varistance (ZR1) connectée en parallèle à l'alimentation de puissance électrique (2) ;
une deuxième varistance (ZR2) connectée entre une extrémité de la première varistance (ZR1) et une ligne de terre ;
un parafoudre (AR1) connecté entre la deuxième varistance (ZR2) et la ligne de terre ;
un filtre (L1) connecté entre l'alimentation de puissance électrique (2) et la charge (3) pour réduire le bruit d'une ligne d'alimentation de puissance électrique (4) ; et
une troisième varistance (ZR3) ayant des bornes connectées respectivement à des côtés entrée et sortie du filtre (L1) sur la ligne d'alimentation de puissance électrique (4) connectée à la charge (3), dans laquelle
des capacités de la première varistance (ZR1), de la deuxième varistance (ZR2), et de la troisième varistance (ZR3) sont égales.

2. Système de climatisation comprenant :
un dispositif de climatisation comportant une unité intérieure et une unité extérieure ; et
la protection d'alimentation de puissance électrique (1) selon la revendication 1 qui est prévue avec l'unité intérieure.

3. Procédé de fabrication d'une protection d'alimentation de puissance électrique (1) comportant une première varistance (ZR1) connectée en parallèle à une alimentation de puissance électrique (2), une deuxième varistance (ZR2) connectée entre une extrémité de la première varistance (ZR1) et une ligne de terre, et un filtre (L1) connecté entre l'alimentation de puissance électrique (2) et une charge (3) pour réduire un bruit d'une ligne d'alimentation de puissance électrique (4), la protection d'alimentation de puissance électrique (1) étant connectée entre l'alimentation de puissance électrique (2) et la charge (3) alimentée en électricité à partir de l'alimentation de puissance électrique (2), le procédé comprenant :
une étape consistant à égaliser des capacités de la première varistance (ZR1), de la deuxième varistance (ZR2), et d'une troisième varistance (ZR3) connectée à des côtés entrée et sortie du filtre (L1) ;
une étape consistant à connecter un parafoudre (AR1) entre la deuxième varistance (ZR2) et la ligne de terre ; et
une étape consistant à connecter des bornes de la troisième varistance (ZR3) respectivement aux côtés entrée et sortie du filtre (L1) sur la ligne d'alimentation de puissance électrique (4) connectée à la charge (3).
